# EUROPEAN PATENT APPLICATION

(11) **EP 3 757 316 A1**
(43) Date of publication of application: **30.12.2020**
(21) Application number: 19182883.9
(22) Date of filing: 27.06.2019
(51) Int. Cl.: E04G 21/14, B66C 1/66, F16B 25/00

(54) **CONCRETE SCREW WITH INTEGRATED WASHER WITH BULGING UNDERHEAD SURFACE**

(71) Applicant: Hilti Aktiengesellschaft, 9494 Schaan (LI)
(72) Inventor: Sanchez Lopez, Marco, 6800 Feldkirch (AT); Oberhammer, Klaus, 6973 Höchst (AT)
(74) Representative: Hilti Aktiengesellschaft Corporate Intellectual Property

(57) **Abstract**

The invention relates to a concrete screw anchor comprising a shank, a head connected to the shank, an integral washer, which is arranged axially between the head and the shank, and which has an underhead surface, and at least one thread helix, which is arranged on the shank, wherein the head comprises external drive flats for wrench socket engagement. According to the invention, the underhead surface has a bulging clamping section for lifting clutch engagement.

## Description

The invention relates to a concrete screw anchor according to the preamble of claim 1. Such a concrete screw anchor comprises a shank, a head connected to the shank, an integral washer, which is arranged axially between the head and the shank, and which has an underhead surface, and at least one thread helix, which is arranged on the shank, wherein the head comprises external drive flats for wrench socket engagement.

EP3103756 A1 describes a method for lifting a hollow-core slab concrete body, in which self-tapping screw anchors are anchored in the concrete body. The screw anchors provide attachment points for hoisting cables. In particular, the hoisting cables are attached to lifting rings or lifting heads provided at the screw anchors. According to one embodiment of EP3103756 A1, the lifting head is received in a recess in the upper surface of the slab.

DE10008342 A1 shows screw anchors for autoclaved lightweight concrete blocks. The screw anchors have holes in their respective heads for attachment to lifting hooks.

US4769960 A discloses a lifting clutch that can grab the head of a bolt that is cast into a concrete body. More particularly, the lifting clutch has a bifurcated claw that can grab the head of the bolt in a swivel movement.

WO14040995A1 describes a concrete screw anchor, wherein the ratio between the outer diameter of the thread helix and the pitch of the thread helix is between 1 and 2, preferably between 1,2 and 1,45.

An object of the invention is to provide a set-up which can provide particularly efficient concrete slab hoisting at particularly low effort, in particular manufacturing effort and/or installation effort.

This object is achieved by a screw anchor having the features of claim 1. Dependent claims refer to preferred embodiments of the invention.

According to the invention, the underhead surface has a bulging clamping section for lifting clutch engagement, in particular for lifting clutch claw engagement.

Accordingly, a concrete-tapping screw anchor is provided with an underhead geometry that can be engaged by usual swivelling lifting clutches. This allows providing easy-to-couple concrete slab hoisting points with particularly low manufacturing and installation effort.

The shank and the head are connected to transfer installation torque form the head into the shank. In particular, the shank and the head are connected via the integral washer. The shank and the hear, respectively, both project axially from the integral washer, into opposite directions. In particular, the head and the integral washer are axially non-overlapping and the integral washer, and the shank are axially non-overlapping. The thread helix projects radially from the shank, in particular from the lateral surface thereof.

The screw anchor is a concrete screw anchor. Accordingly, the thread helix is suitable for tapping and engaging at least green-state concrete, i.e. it can cut a mating thread therein. Concrete in the green-state can be considered to be concrete that has set but has not hardened completely, e.g. concrete 0 to 8 hours after the pour. The thread helix might also be suitable for tapping hardened concrete. The screw anchor might have additional thread helixes on the shank, either for concrete tapping purposes or for other purposes, such as borehole stabilization.

The head is provided with external drive flats, i.e. the head is an external polygon head. The drive flats are essentially flat surfaces, arranged in an angular relationship to the respective neighbouring drive flats. In particular, the drive flats have, as a whole, polygonal cross-section. The drive flats are thus installation tool-engagement faces, wherein, in practice, the installation tool will usually primarily engage close to the edges formed between adjacent drive flats. Preferably, the head is a hex head, and as such, has six external drive flats.

The integral washer section is located axially between the head and the shank. The underhead surface is the shank-ward, tip-ward surface of the integral washer, i.e. the surface that is facing in the installation direction of the screw anchor.

A lifting clutch can be intended to connect anchors with rigging gear. In particular, the lifting clutch can have a swivel-mounted claw for releasably engaging behind the underhead surface, preferably by swivelling around a swivel axis that is orthogonal to the longitudinal axis of the screw anchor. The bulging, convex clamping section can at least approximately correspond to the swivel path of the claw, thereby preferably allowing particularly efficient clamp engagement. Preferably, the surface of the bulging clamping section is a section of a sphere.

The terms "axial", "radial" and "circumferential" shall, in particular, refer to the longitudinal axis of the screw anchor, which usually is the longitudinal axis of its shank.

The washer is an integral washer and as such, at least the head and the integral washer are monolithic. Preferably, the head, the integral washer and the shank are monolithic, which can further facilitate manufacturing, in particular in consideration of a metal forming process. The at least one thread helix and the shank can preferably also be monolithic. They could also be separate parts.

The head, the integral washer and the shank are preferably metal parts, in particular steel parts, which can be advantageous in view of load capacity and manufacturing. The thread helix is, preferably, also a metal part, in particular a steel part.

Advantageously, the integral washer has circular cross-section throughout. Amongst other, this can prevent unwanted lockage during lifting clutch engagement, in particular when the lifting clutch is not perfectly aligned with respect to the screw anchor.

According to another advantageous aspect of the invention, which could also be independent of the concept of providing the bulging clamping section, on each of the drive flats is provided a radially projecting head hump that arises from the integral washer. Accordingly, on each of the drive flats is a, in particular rounded, protuberance. The head humps project radially from the respective drive flats on which they are arranged, i.e. they each radially project from their underlying drive flat. The head humps start at the integral washer and project rearwardly from the integral washer. Head humps can provide rearward support of the integral washer, which can improve the load bearing capacity of the integral washer to be engaged by the lifting clutch. Alternatively or additionally, they can facilitate manufacturing, in particular when the head, the integral washer and the shaft are manufactured by deforming, in particular upsetting, a metal wire piece: Since the cross-section of the head is polygonal, i.e. non-circular, whereas the original wire usually has circular cross-section, material has to flow laterally, in the circumferential direction, when the head is formed. If this flow is incomplete, lobular manufacturing imperfections projecting from the integral washer or the head could arise, potentially blocking lifting clutch engagement. However, if head humps are provided, they can accommodate material that otherwise needed to flow laterally, thus increasing design freedom without encountering said manufacturing imperfections.

The head humps, the head and the integral washer are preferably monolithic. This can be advantageous in view of manufacturing, in particular when a piece of wire is upset, as already mentioned above.

Advantageously, the head humps can be circumferentially centred on their respective drive flats, i.e. placed in the circumferential middle of the respective drive flats, which can further improve symmetry and/or material flow.

Preferably, the radial height and/or the circumferential width of each head hump gradually decreases with increasing distance from the integral washer, i.e. they decrease toward the rear end of the screw anchor. Such a tapering design can improve performance and/or be advantageous in view of manufacturing. In particular, it can be advantageous in view of material flow and/or can counteract notch effects.

According to another preferred embodiment of the invention, the head has an axially extending drive zone, wherein the drive flats axially reach into the drive zone, whereas the head humps do not axially reach into the drive zone. Accordingly, the drive zone includes rear subareas of all drive flats, whereas the head humps are located exclusively outside of the drive zone and they thus do not project into the drive zone. This provides a zone that allows particularly good and efficient installation tool engagement. In particular, the drive zone of the head fits into a corresponding wrench socket. In the drive zone, the head is, at least roughly, right-prism-shaped. The head humps are arranged axially between the drive zone and the integral washer. The head might have additional humps, which can have other shape and/or functionality as compared to the head humps.

It is particularly preferred that the surface of each of the head humps encloses an angle of 25° ± 5° with the longitudinal axis of the screw anchor. This can permit, on the one hand, particularly efficient installation tool engagement, in particular by providing a sufficiently long drive zone, and on the other hand, it can efficiently counteract undesired manufacturing imperfections.

Preferably, each of the head humps is a cone segment of a common right circular cone. Accordingly, each of the head humps is a cone segment, and there exist a common virtual cone comprising all the cone segments, wherein the cone is a right cone and has a circular base. This can be advantageous in view of material flow and/or load transfer.

The common right circular cone preferentially has a half-angle of 25° ± 5°. Again, this can permit, on the one hand, particularly efficient installation tool engagement, in particular by providing a sufficiently long drive zone, and on the other hand, it can efficiently counteract undesired manufacturing imperfections.

The ratio of the outer thread diameter of the thread helix to the thread pitch of the thread helix can be between 1 and 2, especially between 1,2 and 1,45. These are typical thread dimensions for screw anchors that are intended for tapping insertion into concrete substrates. In particular, and in line with the usual definition, the pitch can be understood to be the axial distance between successive turns of a thread helix.

In use, the shank of the concrete screw anchor is preferably only partly embedded in a concrete slab, so that there remains free space between the clamping section of the underhead surface of the screw anchor and the concrete slab. The clamping section thus neither directly nor indirectly abuts on the concrete slab in a state where the head of the screw anchor is not engaged by an installation tool, i.e. in a final, installed state and not in a merely transient installation state. The spacing between the clamping section of the underhead surface and the concrete slab permits lifting clutch engagement.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a first perspective view of a screw anchor.
Figure 2 is a second perspective view of the screw anchor of figure 1.
Figure 3 is an enlarged side view of the rear region of the screw anchor of figure 1.

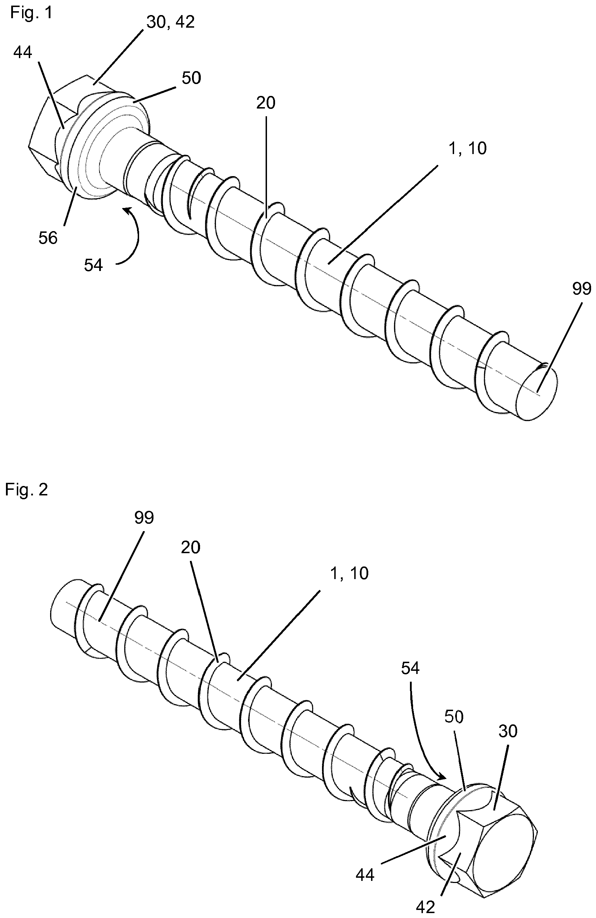

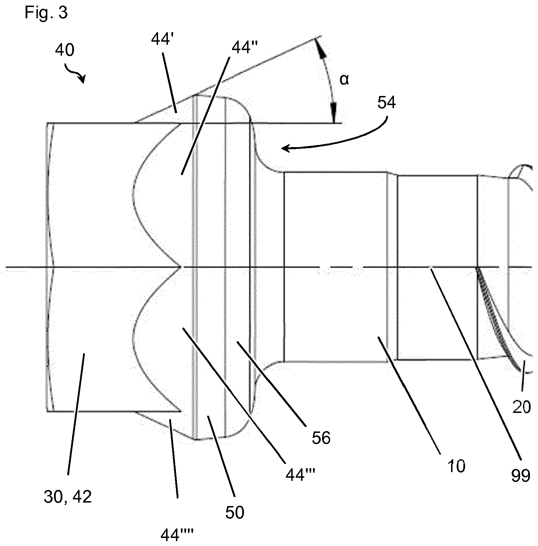

Figures 1 to 3 show an example of a screw anchor 1. The screw anchor 1 extends along a longitudinal axis 99 and comprises a shank 10 and a head 30 connected to the shank 10 at the rearward end of the shank 10 via an integral washer 50 located axially between the shank 10 and the head 30. The screw anchor 1 furthermore comprises a thread helix 20 arranged on the outside lateral surface of the shank 10, projecting from the shank 10 and winding around the shank 10.

The thread helix 20 is sufficiently hard so that it is able to tap into concrete, at least into green-state concrete, but also into hardened concrete. The screw anchor 1 is thus a concrete screw anchor. The tip of the screw anchor 1, i.e. its forward end opposite to the head 30, is blunt in the shown embodiment, but it may also be pointed.

The head 30 of the screw anchor 1 comprises a plurality of external drive flats 42. The head 30 is intended to be plugged into a wrench socket, where the drive flats 42 are engaged by the wrench socket to transfer torque from the wrench socket to the head 30. In the present embodiment, the head 30 is a hex head and thus has six drive flats 42, but other numbers of drive flats 42 are also possible. The drive flats 42 are external drive flats and thus face away from the longitudinal axis 99.

The integral washer 50 has mainly circumferential cross-section throughout and radially projects over the shank 10 and preferably also over the head 30. The integral washer 50 has an underhead surface 54, i.e. a surface that faces in the installation direction of the screw anchor 1. The underhead surface 54 has a bulging clamping section 56, in which the integral washer 50 has a convex surface. Preferably, the clamping section 56 has a toroid-sectional surface. The bulging clamping section 56 is intended to be clamped by the claw of a lifting clutch.

On each of the drive flats 42 is provided a head hump 44, which radially projects from the respective drive flat 42. On their respective tipward ends, the head humps 44 merge into the integral washer 50, and at their inner surfaces, the head humps 44 merge into the head 30. Originating from the integral washer 50, each of head humps 44 projects rearwardly, away from the tip of the screw anchor 1, wherein each of head humps 44 tapers both in the radial direction, i.e. in its height, and in the circumferential direction, i.e. in its width, with increasing axial distance from the integral washer 50. The head humps 44 are cone segments of a common virtual right cone which is located coaxially to the longitudinal axis 99 of the screw anchor 1. This cone has a half angle of 25° ± 5°. Consequently, the surface of each of the head humps 44 encloses an angle α of 25° ± 5° with the longitudinal axis 99 of the screw anchor 1.

At the its rear end, i.e. close to its end face, the head 30 has an axially extending drive zone 40. Whereas the drive flats 42 axially extend into the drive zone 40, the head humps 44 do not, i.e. the drive flats 42 and the drive zone 40 are positioned in axially overlapping relationship, whereas the head humps 44 and the drive zone 40 are positioned in axially non-overlapping relationship. All of the head humps 44 is thus positioned outside of the drive zone 40. Consequently, the drive zone 40 provides a right prismatic structure, in particular a six-sided right prism, on the head 30, which allows engagement by standard drive sockets.

The shank 10, the integral washer 50, the head 30 and the head humps 44 are monolithic and consist of steel. The thread helix 20 is preferably also monolithic with the previously mentioned parts.

## Claims

1. Concrete screw anchor (1) comprising
- a shank (10),
- a head (30) connected to the shank (10),
- an integral washer (50), which is arranged axially between the head (30) and the shank (10), and which has an underhead surface (54), and
- at least one thread helix (20), which is arranged on the shank (10),
- wherein the head (30) comprises external drive flats (42) for wrench socket engagement,
**characterized in that**
the underhead surface (54) has a bulging clamping section (56) for lifting clutch engagement.

2. Screw anchor (1) according to claim 1,
**characterized in that**
the head (30), the integral washer (50) and the shank (10) are monolithic.

3. Screw anchor (1) according to any one of the proceeding claims,
**characterized in that**
the head (30), the integral washer (50) and the shank (10) are metal parts.

4. Screw anchor (1) according to any one of the proceeding claims,
**characterized in that**
the integral washer (50) has circular cross-section throughout.

5. Screw anchor (1) according to any one of the proceeding claims,
**characterized in that**
on each of the drive flats (42) is provided a radially projecting head hump (44) that arises from the integral washer (50),

6. Screw anchor (1) according to claim 5,
**characterized in that**
the head humps (44), the head (30) and the integral washer (50) are monolithic.

7. Screw anchor (1) according to any one of claims 5 or 6,
**characterized in that**
the head humps (44) are circumferentially centred on their respective drive flats (42).

8. Screw anchor (1) according to any one of claims 5 to 7,
**characterized in that**
the radial height and/or the circumferential width of each head hump (44) gradually decrease with increasing distance from the integral washer (50).

9. Screw anchor (1) according to any one of claims 5 to 8,
**characterized in that**
the head (30) has an axially extending drive zone (40), wherein the drive flats (42) axially reach into the drive zone (40), whereas the head humps (44) do not axially reach into the drive zone (40).

10. Screw anchor (1) according to any one of claims 5 to 9,
**characterized in that**
the surface of each of the head humps (44) encloses an angle (α) of 25° ± 5° with the longitudinal axis (99) of the screw anchor (1).

11. Screw anchor (1) according to any one of claims 5 to 10,
**characterized in that**
each of the head humps (44) is a cone segment of a common right circular cone.

12. Screw anchor (1) according to claim 11,
**characterized in that**
the common right circular cone has a half-angle of 25° ± 5°.

13. Screw anchor (1) according to any one of the proceeding claims,
**characterized in that**
the ratio between the outer diameter of the thread helix (20) and the pitch of the thread helix (20) is between 1 and 2, preferably between 1,2 and 1,45.
